Europäisches Patentamt

European Patent Office

Office européen des brevets

(19)

(11) EP 0 871 128 A2

(12) EUROPEAN PATENT APPLICATION

(43) Date of publication:
14.10.1998 Bulletin 1998/42

(51) Int Cl.$^6$: G06F 12/10

(21) Application number: 98302673.3

(22) Date of filing: 06.04.1998

(84) Designated Contracting States:
AT BE CH CY DE DK ES FI FR GB GR IE IT LI LU
MC NL PT SE
Designated Extension States:
AL LT LV MK RO SI

(30) Priority: 10.04.1997 US 843667

(71) Applicant: DIGITAL EQUIPMENT CORPORATION
Maynard, Massachusetts 01754 (US)

(72) Inventor: Mangalat, Shashi Kumar
Nashua, New Hampshire 03063 (US)

(74) Representative: Charig, Raymond Julian
Eric Potter Clarkson,
Park View House,
58 The Ropewalk
Nottingham NG1 5DD (GB)

(54) **Method and apparatus for providing a shared data region using shared page tables**

(57)     A method and apparatus for providing a shared data region for use by multiple user processes executing in a computer system is described. A multi-level page table hierarchy is used to perform virtual to physical address translation for a shared data region. The multi-level page table hierarchy includes 3 levels of page tables in which the third level of page tables associated with the shared data region are commonly shared amongst processes accessing data in the shared data region. Tasks involved in the memory management of the shared data region are allocated between PMAP (physical mapping) routines and VM (virtual memory) abstraction routines. The PMAP routines generally perform hardware dependent memory management operations, and the VM abstraction routines generally perform operating system dependent memory management operations.

FIG. 2B

EP 0 871 128 A2

Printed by Jouve, 75001 PARIS (FR)

**Description**

Background of the Invention

This invention relates generally to memory management and more particularly to sharing data regions among computer programs executing in a computer system.

As it is known in the art, a computer system typically includes a central processing unit (CPU) and system resources such as memory. Computer programs are executed in the computer system and may use a resource, such as a portion of memory, as a shared system resource or a non-shared system resource. A non-shared system resource is available to only one computer program. A shared system resource may be used, for example, by two or more computer programs. Memory is a system resource which may be shared amongst two or more executing computer programs or processes to facilitate certain tasks, such as interprocess communication.

In a computer system, memory management techniques are often used to control the allocation and use of memory amongst computer programs executing in a computer system. -Generally, memory management includes both hardware and software for controlling the allocation and use of the memory. A computer program executing in a computer system uses virtual addresses to access its data and instructions. However, before virtual addresses can be used to access physical memory, they are translated into physical addresses. Virtual memory permits an executing computer program to address an area of memory larger than the actual amount of physical memory residing in the computer system. Each virtual address referenced by the computer program goes through an address mapping process to obtain the corresponding physical address.

Virtual address translation is handled automatically by means of a page table hierarchy. Generally, the page table hierarchy comprises one or more levels of page tables. Each page table includes one or more page table entries. Virtual address space and physical address space are usually divided up into blocks of memory called pages representing a predetermined amount of memory. Each page table entry contains mapping information for mapping one page of virtual memory to one page of physical memory. Each page table entry may also contain other information, such as hardware and software control information for a corresponding virtual page.

Memory management software in the operating system, in combination with a memory management unit (MMU) in the computer hardware, uses the mapping information stored in the page table to translate virtual addresses into physical addresses during the execution of a computer program.

Virtual memory typically includes an operating system portion and a user portion. The operating system portion ("operating system address space") is a range of virtual addresses used for operating system tasks generally characterized by a privileged ("system") execution mode. The user portion ("user virtual address space") is a range of virtual addresses for each user process task executing in a computer system generally characterized by a non-privileged ("user") execution mode. A user's computer program, for example, executes in the user virtual address space.

Two or more computer programs may share a portion of memory containing only machine executable instructions ("shared code segment") executed by each computer program. In contrast, a portion of memory containing only data may be shared between two or more computer programs to facilitate data communications between the computer programs. Such a portion of shared memory is often referred to as a "shared data region".

Problems are often encountered using existing memory management techniques to manage shared data regions. Some existing memory management techniques which efficiently provide shared code segments are generally not likewise efficient when used with shared data regions due to underlying differences between a shared code segment and a shared data region. One such major difference is that an implementation of a shared data region typically interfaces with different portions of the operating system than an implementation of a shared code segment due to the requirements and characteristics of each. For example, one such existing memory management technique uses shared page tables in managing shared code segments. This existing implementation of shared code segments relies on an underlying file system. Shared code is typically read-only and produced and stored in a file for subsequent use. In contrast, use of a shared data region is typically modifiable (read-write access) and not well suited for use with static storage such as a file. Thus, using a file system in memory management of a shared data segment is not generally in accordance with its characteristics and needs.

Existing techniques for providing shared data regions also experience performance and memory consumption problems. One such existing technique used with shared data regions consumes a large amount of memory by storing, for each virtual page of a shared data region, a list of computer programs using the virtual page. Additional performance problems occur while performing various memory management operations that require manipulating these lists. One such memory management operation is when a computer program using a shared data region relinquishes use of (detaches from) the shared data region.

Generally, detaching a computer program from a shared data region involves disassociating the computer program with mapped virtual pages included in the shared data region by ensuring that the computer program is removed from each list associated with each mapped virtual page. This is often CPU-intensive and becomes very apparent when the shared data region is large in size and used by a very large number of computer programs, as with a client database application used by a large number of server processes. The problem is further magnified when there are multiple computer programs executing in a computer system with multiple CPUs. A first computer program executing in a first CPU that is detaching from a shared data region may block other computer programs executing in other CPUs also requiring access to the shared data region.

Thus, an efficient technique for managing shared data regions is needed which minimizes performance problems and memory consumption problems as those experienced in existing memory management systems. Specifically, there is required a new technique for providing shared data regions which minimizes the amount of computer system resources used in managing the shared data region, and minimizes the amount of time required to manage shared data regions among multiple computer programs.

## Summary of the Invention

The invention, in its broad form, resides in a method of sharing a data region among a plurality of process, as recited in claim 1. The invention also resides in a memory in a computer system as recited in claim 11.

Described hereinafter is a method of sharing a data region among processes executing in a computer system. A page table is allocated which maps a portion of the shared data region. The page table is used in performing virtual to physical address translations for physical memory locations within the portion of the shared data region. The page table is associated with a first process in response to a request by the first process. The page table is also associated with a second process in response to a request by the second process.

Also described hereinafter is a data structure stored in a memory. The data structure is used for managing a shared data region among processes executing in a computer system. The data structure includes a first page table associated with a current portion of the shared data region. The first page table is used to perform virtual to physical address translations when a process attempts to access a data location in the current portion of the shared data region. A first process and a second process are associated with the first page table. A second page table is associated with the first user process and a third page table is associated with the second user process. Both the second and third page tables are used in performing physical to virtual address translations. A segment list is associated with the shared data region and an entry of the segment list corresponds to the current portion and is associated with the first page table.

Thus, there is provided an efficient technique for managing shared data regions which minimizes performance problems and memory consumption problems as those experienced in existing memory management systems. The technique provides for sharing data regions and minimizes the amount of computer system resources used in management of a shared data region, and minimizes the time required to manage shared data regions among computer programs.

## Brief Description of the Drawings

A more detailed understanding of the invention may be had from the following description of a preferred embodiment, given by way of example, and to be understood with reference to the accompanying drawing wherein:

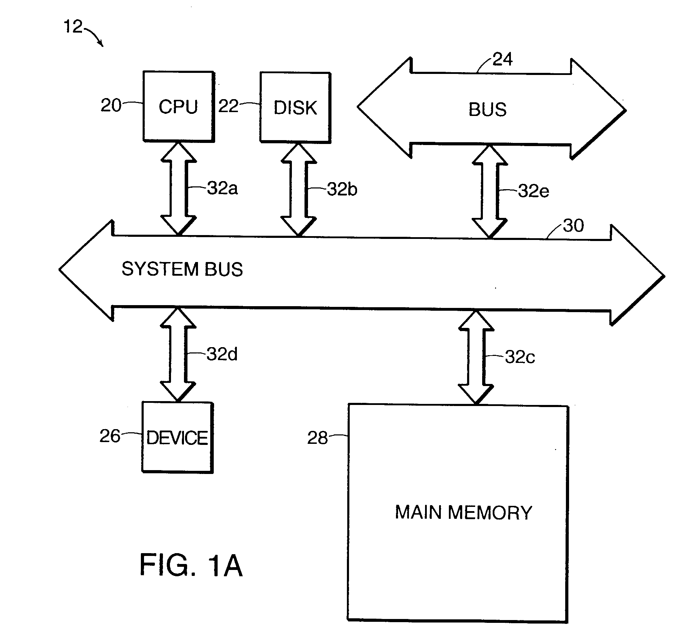

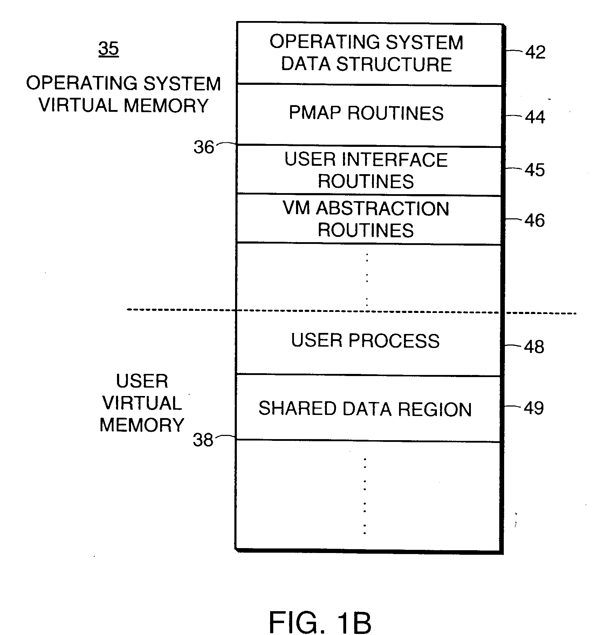

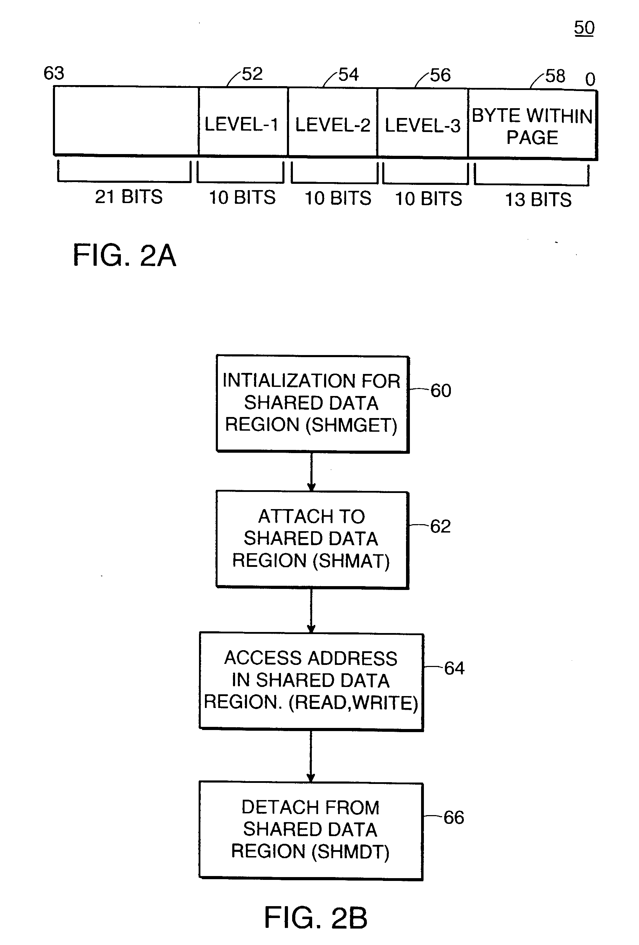

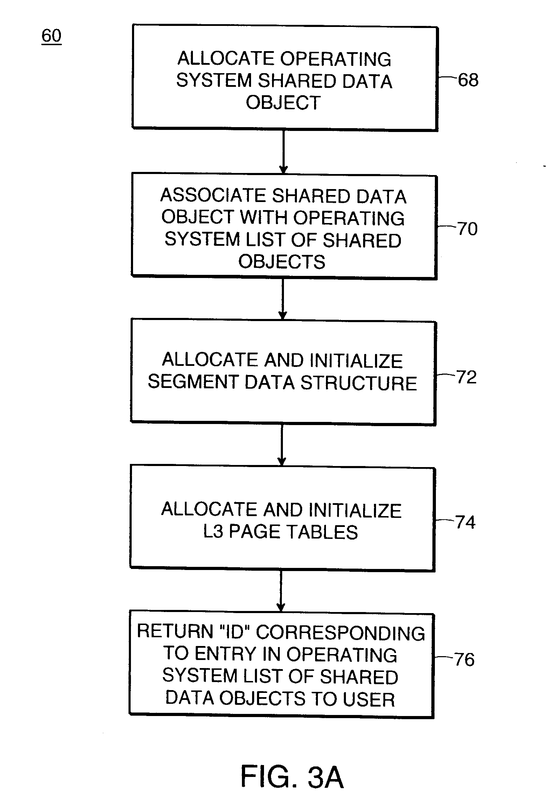

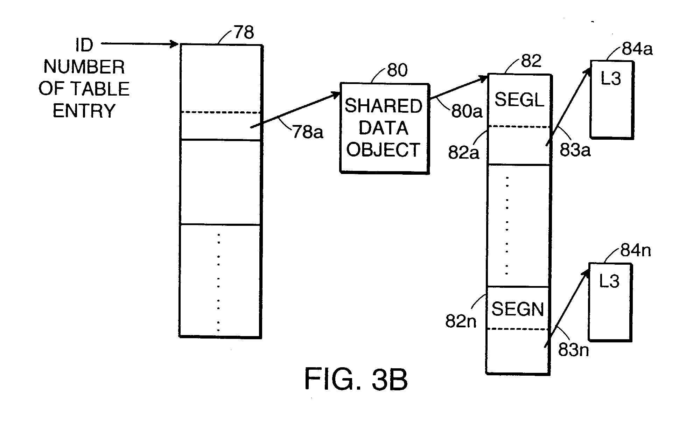

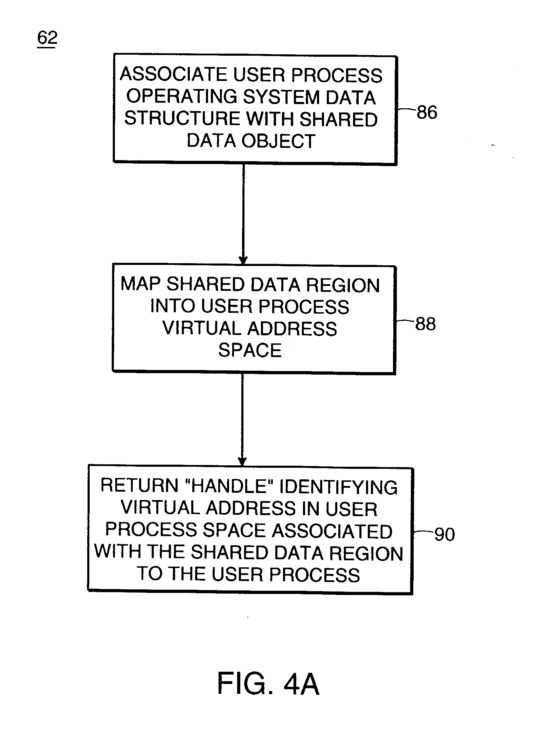

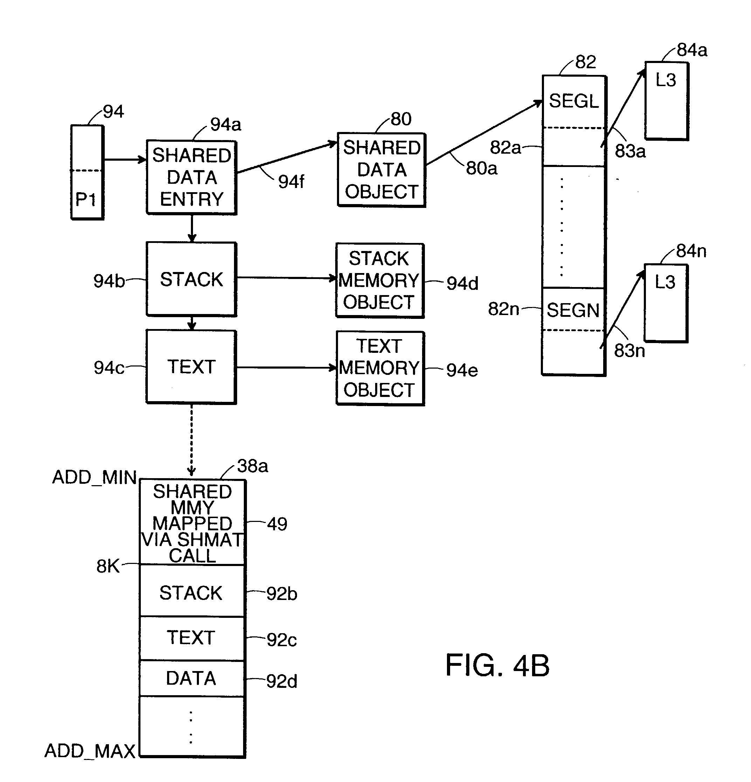

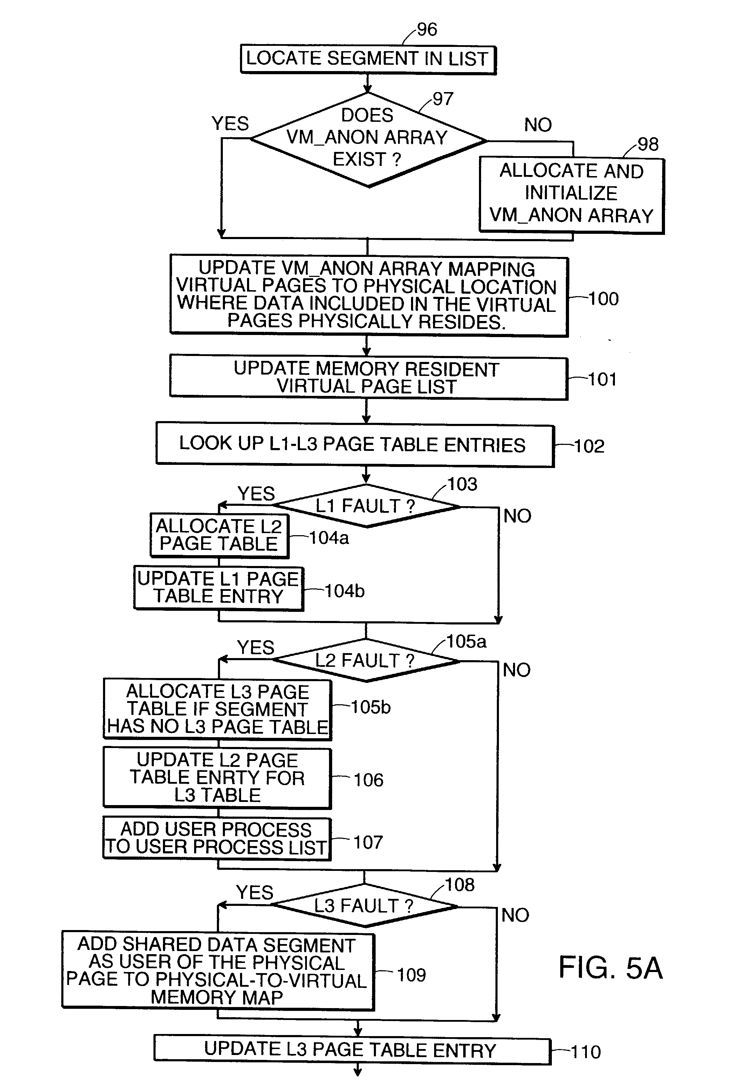

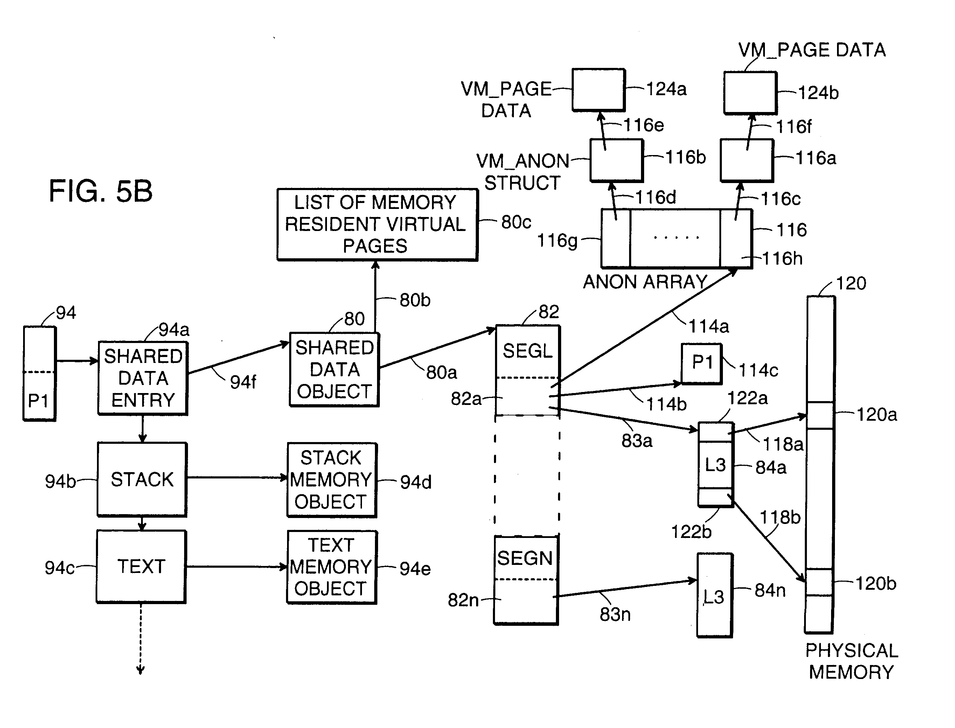

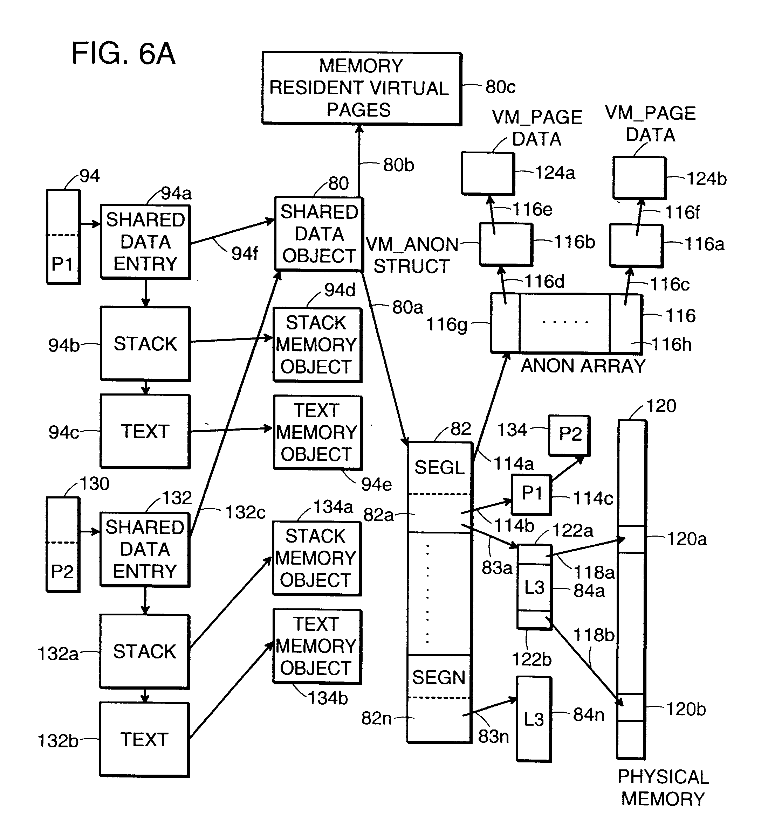

- ◆ FIG. 1A is a block diagram of a computer system;
- ◆ FIG. 1B is a block diagram of an embodiment of the contents of virtual memory space as mapped in accordance with the main memory of FIG 1A;
- ◆ FIG. 2A is an embodiment of a virtual address format;
- ◆ FIG. 2B is a flowchart depicting method steps of an embodiment of a method of operations performed during the execution of a user process to access a shared data region;
- ◆ FIG. 3A is a flowchart depicting method steps of an embodiment of a method of initializing a shared data region;
- ◆ FIG. 3B is a block diagram of the state of operating system data structures after initialization of the shared data region using the method of FIG. 3A;
- ◆ FIG. 4A is a flowchart depicting method steps of an embodiment of a method of attaching a user process to a shared data region;
- ◆ FIG. 4B is a block diagram of the state of operating system data structures after a user process attaches to a shared data region using the method from FIG. 4A;
- ◆ FIG. 5A is a flowchart depicting method steps of an embodiment of a method for performing memory management of a shared data region when accessed by a user process causing one or more page fault conditions;
- ◆ FIG. 5B is a block diagram of an embodiment of the state of operating system data structures after an initial user process accesses a shared data region using the method steps of FIG. 5A;
- ◆ FIG. 6A is a block diagram of an embodiment of the state of operating system data structures after multiple user processes access a shared data region;

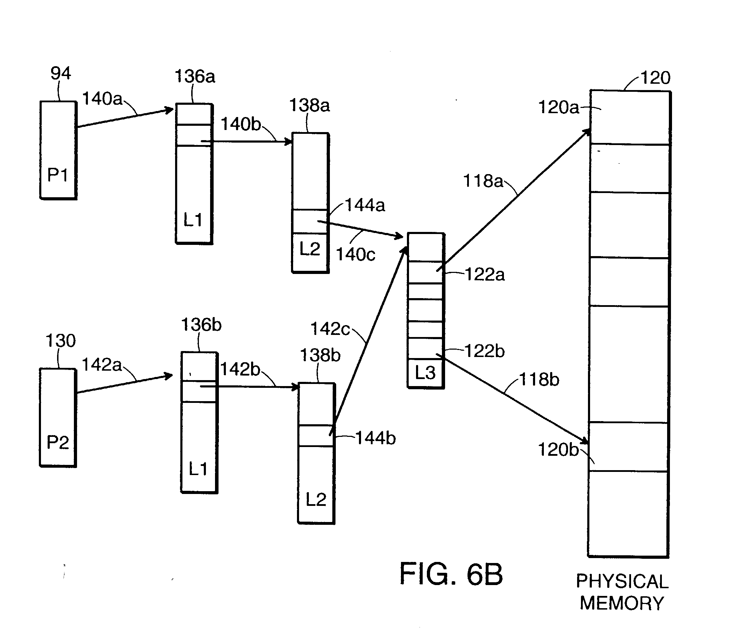

♦ FIG. 6B is a block diagram of an embodiment of the state of other operating system data structures after two user processes access a shared data region;

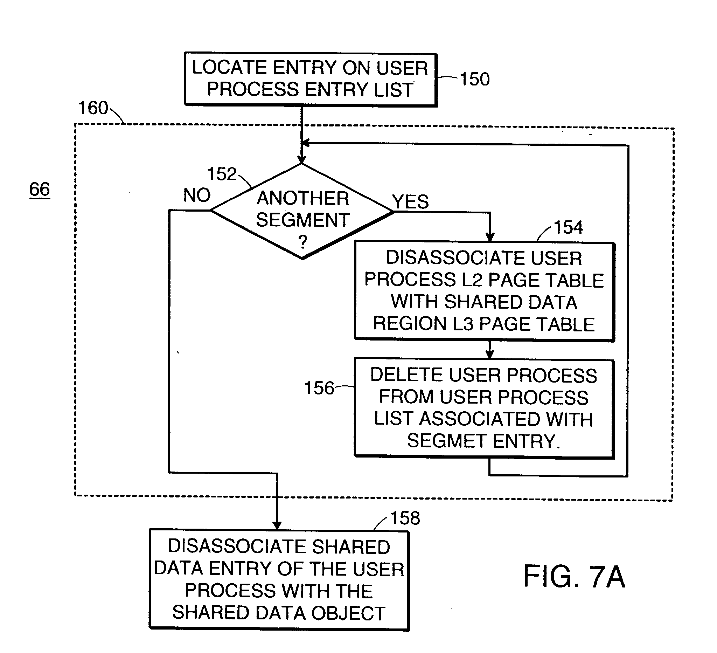

♦ FIG. 7A is a flowchart depicting method steps of an embodiment of a method for memory management of a shared data region when a user process detaches from a shared data region;

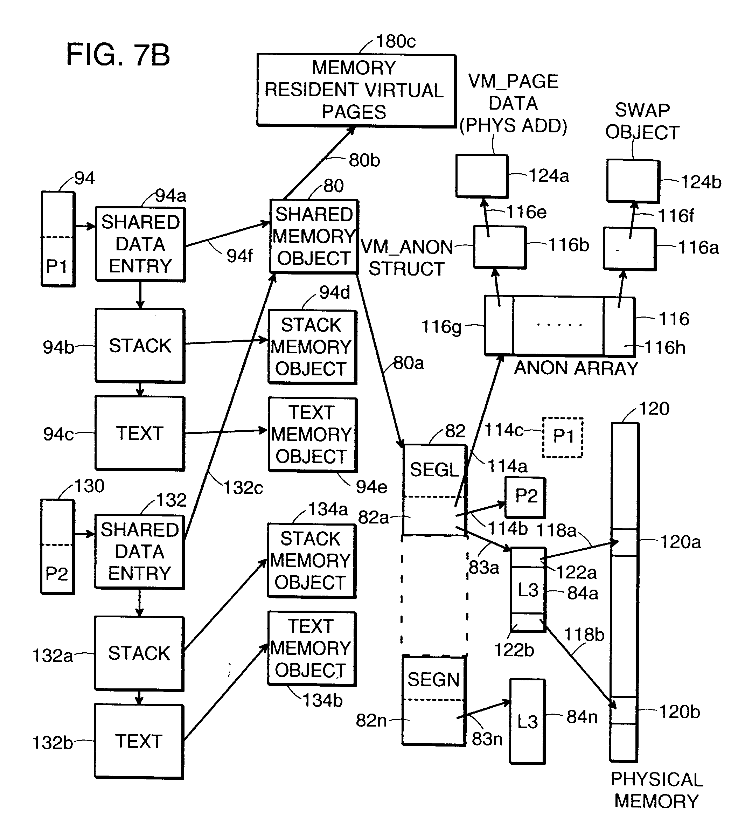

♦ FIG. 7B is a block diagram of an embodiment of operating system data structures after a user process detaches from a shared data region using the method steps of FIG. 7A;

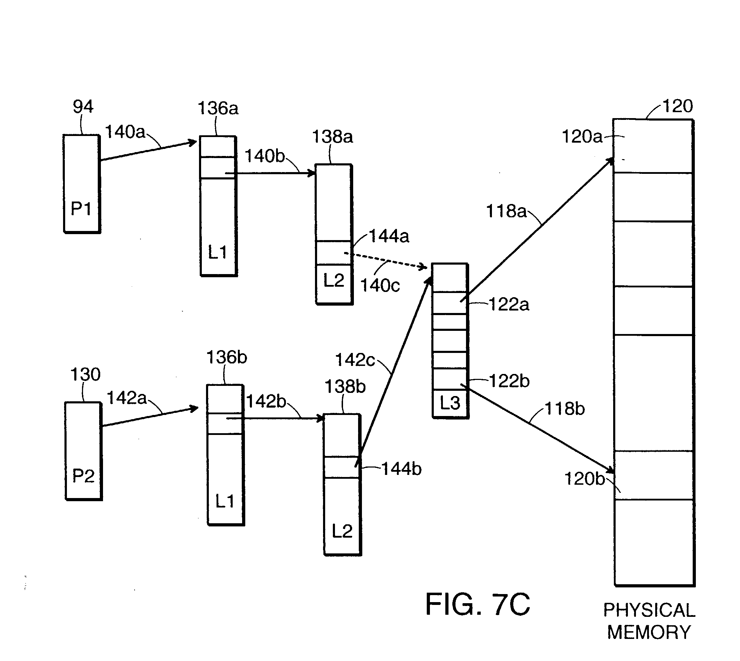

♦ FIG. 7C is block diagram of an embodiment of other operating system data structures after a user process detaches from a shared data region using the method steps of FIG. 7A;

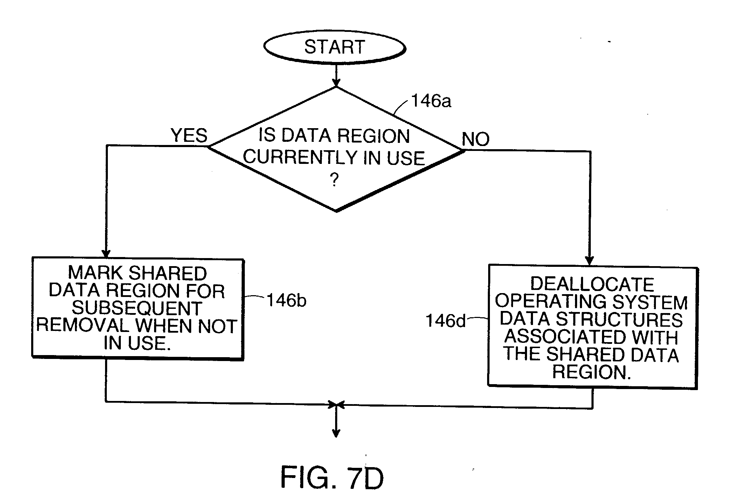

♦ FIG. 7D is a flowchart depicting method steps of an embodiment of a method for removing and deallocating a shared data region;

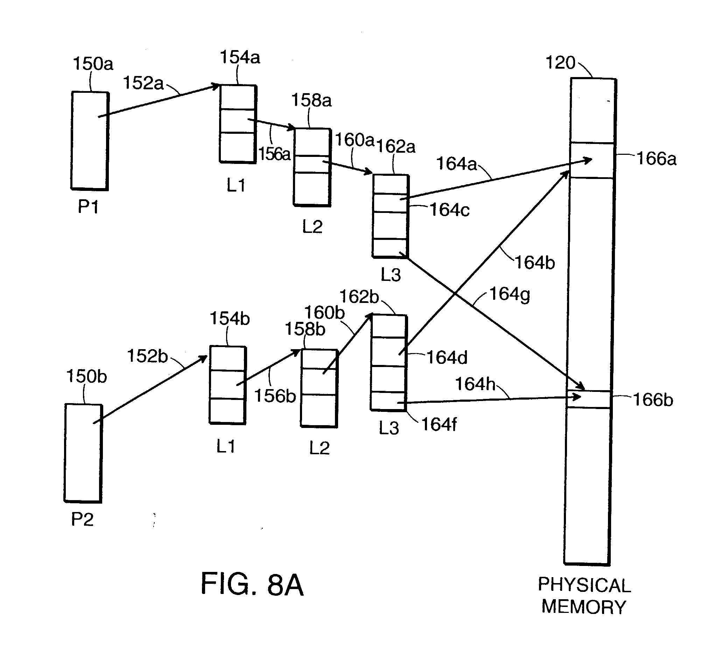

♦ FIG. 8A is block diagram of an embodiment of page table data structures when user processes access a shared data region using an alternate memory management technique; and

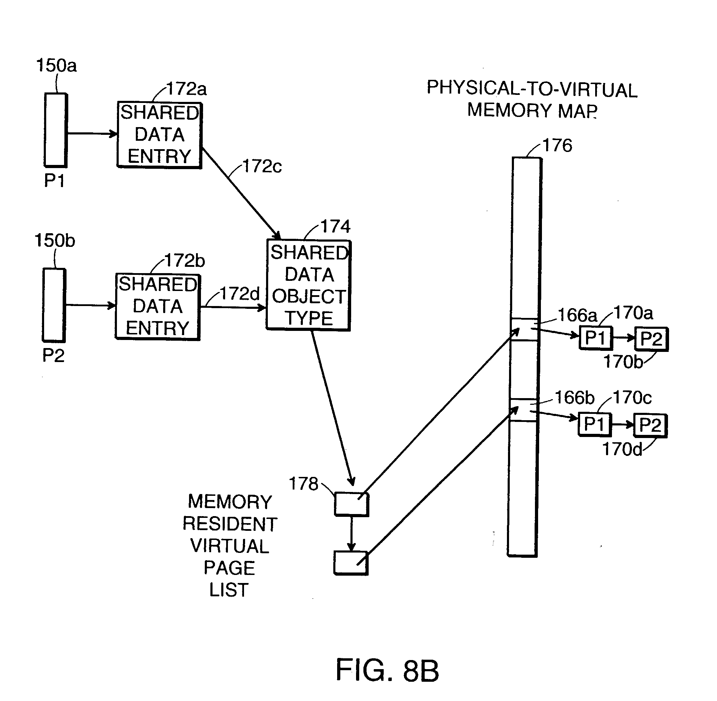

♦ FIG. 8B is block diagram of an embodiment of other operating system data structures when user processes access a shared data region using the alternate memory management technique.

Description of the Preferred Embodiment

Referring now to FIG. 1A, an embodiment of a computer system 12 is shown to include a central processing unit (CPU) 20, a computer disk drive 22, a system bus 30, system device 26 and a main memory 28, each interconnected by system bus 30 via bus interfaces 32a-32d. A second bus 24 such as an I/O bus or another system bus is also connected to the system bus 30 via bus interface 32e. The CPU, disk drive, other system device, second bus and main memory communicate over the system bus 30.

Referring now to FIG. 1B, an embodiment of a virtual memory space 35 mapped to main memory 28 is depicted. Main memory 28 (of FIG. 1A) is physical memory in which, for example, operating system code and data, as well as user data and code are stored. Computer systems typically include memory management hardware and software which control the allocation and use of physical memory such as main memory 28. An executing computer program references a virtual address within the virtual address space 35 which is translated to a physical address corresponding to a location in main memory. Thus, virtual address space is "mapped onto" physical memory via address translation. FIG. 1B shows one particular embodiment of how virtual address space may be mapped onto main memory 28. Details of how virtual addresses in our particular embodiment are mapped to physical addresses are described below.

The embodiment of FIG. 1B depicts virtual memory divided into two main portions, an operating system virtual memory portion 36 (system space) and a user virtual memory portion 38 (user space). The operating system virtual memory portion includes operating system data structures 42, machine executable code which performs physical memory mapping (PMAP routines) 44, machine executable code which performs additional virtual memory management functions (VM Abstraction routines) 46, and machine executable code which interfaces with the user process 48 (operating system user interface routines) 45.

The user virtual memory portion 38 is associated with user process 48. The user process 48 generally includes machine executable code and data. Typically, a computer program corresponds to a user processes 48 executing in the computer system 12. Included in the user virtual memory section 38 is a shared data region 49 which is used by the user process 48. The shared data region 49 is shared among multiple user processes. As is described in conjunction with other figures, the physical memory corresponding to shared data region 49 is mapped into the virtual address space associated with each user process using the shared data region 49. The virtual address space of each user process maps to the same physical location in memory 28 even though each user process has its own range of virtual addresses associated with the shared data region 49.

The operating system virtual memory portion 36 is used by the operating system in performing various tasks such as memory management. The user virtual memory portion 38 is used by a user process, such as user process 48, executing in computer system 12. Virtual memory may be divided up into more than two main portions as previously described in conjunction with FIG. 1B. Additionally, as will be described below, the method of performing virtual to physical address translation for a user process virtual address may differ from the address translation technique used in translating an operating system virtual address.

As shown in FIG. 1B, one embodiment of memory management software includes routines which perform the physical mapping of virtual to physical addresses, PMAP routines 44, and VM abstraction routines 46. Generally, VM abstraction routines 46 provide operating system dependent memory management operations, while PMAP routines 44 generally provide hardware dependent memory management operations, for example, which are dependent upon the underlying memory management hardware. PMAP routines 44 usually operate upon hardware dependent data structures, such as a page table and its page table entries. VM abstraction routines 46 manage higher level or more abstract data structures which are typically tailored to the particular operating system executing in the computer system 12. The VM routines 46 interact with PMAP routines 44 to perform memory management operations, such as shared data region management and shared code management.

A memory region that is shared among user processes has various attributes or characteristics. For example, a shared memory region may be classified as a "data region" allowing a user process to "read and write" data from the shared memory locations (R/W access). A shared memory region may also be "read only" in that a process may only be allowed to read data stored in a shared memory location (R-only access). Similarly, a shared memory region in a particular embodiment may be "write only" in that a user process 48 may only be allowed to write the shared memory region (W-only access). The types of accesses available vary with implementation and underlying hardware capabilities.

Shared data regions may be contrasted with shared code regions. A shared code region generally has the read and executable attributes (R/E access) identifying the region as one which contains machine instructions that may be executed by multiple processes. This R/E access attribute of a shared code segment directly contrasts the previously described accesses typically associated with a shared data region, which is generally not executed. Rather, a data region is, for example, used for communications between user processes of data which is read and written amongst user processes executing in the computer system 12.

As it is known to those skilled in the art, a page table hierarchy typically includes one or more page tables in which each page table has one or more page table entries. A page table hierarchy may, for example, be organized in a multi-level hierarchy of page tables as is described below in one preferred embodiment. Each page table entry corresponds to a page of virtual memory. A page table entry provides a mapping for an associated set of virtual addresses into physical memory where the data mapped to those virtual addresses is stored. Various implementations of page table hierarchies range from a simple single level scheme to a multilevel hierarchical page table. In the following embodiment which will be described, a three level page table hierarchy is used. However, a page table hierarchy having any number of levels may also be used consistent with principles of the invention. In this embodiment, a page table base register contains a physical page frame number of the level 1 page table. Level 1 corresponds to the highest level page table, and level 3 corresponds to the lowest or last level within the page table structure in accordance with the use of the various table levels in address translation.

Referring now to FIG. 2A, an embodiment of a virtual address format 50 is shown in which the virtual address consists of 64 bits of information. The page table base register (not shown) contains the physical page frame number of the level 1 page table. Bits included in the LEVEL-1 field 52 of a virtual address 50 are used to index into the first level page table to obtain the physical page frame number of the base of the second level page table. Bits included in the LEVEL-2 field 54 of the virtual address are used to index into the second level page table to obtain the physical page frame number of the base of the third level page table. Bits included in the LEVEL-3 field 56 of the virtual address are used to index into the third level page table to obtain the physical page frame number of the page being referenced. This page frame number obtained from the third level page table corresponds to the physical page in physical memory 28 which contains the physical address corresponding to the virtual address being accessed.

The page frame number of the page being referenced is concatenated with the "byte within page" field 58 to obtain the physical address of the location being accessed. The "byte within page" field 58 contains an offset within the physical page frame number (physical page) corresponding to the virtual address being translated.

What will now be described are various memory management operations that may be associated with the management of a shared data region. As is known to those skilled in the art, a particular implementation may include memory management operations and functions different from those that will be described.

A user process 48 executing in a computer system 12 includes calls to various high-level operating system routines 45 which subsequently call VM abstraction routines to perform memory management operations in establishing and using a shared data region.

Referring now to FIG. 2B, an embodiment of operations typically performed during the execution of a user process 48 using a shared data region is illustrated. The method steps of FIG. 2B represent operations usually performed when executing a user process 48. These steps are performed in the embodiment by the user process 48 calling various routines included in the operating system user routines 45.

At step 60 initialization for the shared data region is performed. Initialization may include, for example, initializing various operating system data structures to enable a data region to be shared. At step 62 the user process 48 attaches to the shared data region. Generally, a user process "attaching" to the shared data region causes a user process to be associated with the shared data region. At step 64 the user process typically performs an access to a virtual address within the shared data region. As will be described in more detail below, this typically causes a modification to the memory management data structures as used by the PMAP and VM abstraction routines. In step 66 a process detaches from the shared data region when the user process is through using a shared data region. Generally, when a user process detaches from a data region there is a disassociation of a user process with the shared data region. Typically, this is accomplished through unmapping and disassociating various operating system data structures corresponding to the shared memory region with other operating system data structures corresponding to the user process.

Below are example calls to routines included in operating system user routines 45 that may be called by user process 48 when using the shared data region 49.

| CODE SEGMENT 1 | | |
| --- | --- | --- |
| | Call # | FIG. 2A method step |
| 1. | id = shmget (size_of_shared_data) | /*step 60 */ |
| 2. | handle = shmat(id) | /*step 62 */ |
| 3. | write (handle, data) | /*step 64 */ |
| 4. | shmdt (handle) | /*step 66 */ |

In the above CODE SEGMENT 1, Call 1 is a call to "shmget" with a parameter "size_of_shared_data" indicating the size in bytes of the shared data region. Referring back to FIG. 2B, this corresponds to step 60. Routine "shmget" returns as an output parameter "id" associated with the shared data region, as will be described in following paragraphs. Function call 2 to "shmat" corresponds to step 62 of FIG. 2B and includes as an input parameter the "id" of the shared data region previously returned from the first function call to "shmget". The routine "shmat" associates the user process making the call with the particular shared data region indicated by "id". "Handle" is a return value from "shmat" used to identify the virtual address in user virtual memory 38 corresponding to the shared data region. "Handle" refers to the virtual address in user process virtual memory 38 to which the shared data region is mapped. Corresponding to step 64 of FIG. 2B is a call to "write" which writes data to the shared data region. The "write" operation has two parameters, "handle" and "data". "Handle" is the shared data region handle previously described. "Data" is the actual data to be written to the shared data region. Function call 4 "shmdt" corresponds to step 66 of FIG. 2B which detaches the user process from the shared memory region. In other words, the user process is disassociated with the shared data region after the call to "shmdt" is complete. The parameter "handle" identifies the address in user virtual memory at which the shared data region is located that is to be disassociated with the user process.

The exact parameters and application programming interface (API) provided varies with implementation and may be different than that previously described.

Referring now to FIG. 3A, an embodiment of a method for initializing the shared data region as performed in step 60 of FIG. 2B will now be described. At step 68 an operating system shared data object is allocated. Typically, the shared data object is a data structure used by the VM abstraction routines 46 in performing memory management operations. As previously described, data structures, such as the shared data object, which are operated upon by the VM abstraction routines vary with computing environment and are generally tailored to fit various aspects of the operating system. As will be seen in paragraphs that follow in the preferred embodiment described herein, the shared data object is one of a multiple of object types operated upon by the VM abstraction routines 46 in accordance with the operating system of a preferred embodiment.

At step 70 the shared data object is associated with an operating system list of shared data objects. When managing various operating system data structures, operating systems typically keep lists of data structures used by user processes. In this embodiment, the operating system keeps a list of shared data objects in the form of a data structure such as an array, as will be described below. When a new shared data object is allocated, the operating system keeps track of this new shared data object which is available for use among multiple processes by adding an entry in a system list identifying the shared data object is available for use.

In step 72, a segment data structure is allocated and initialized. In one embodiment, the shared data region is divided up into one or more segments. Each segment corresponds to a predetermined amount of the shared data region. The segment data structure is initialized in accordance with the number of segments and other parameters particular to the computing environment as required for the memory management of each segment.

In a preferred embodiment, the size of a segment is typically chosen in accordance with other operating system parameters, such as the size of the L3 page table, to maximize use of resources in the computer system 12 in managing the shared data region. In one embodiment, the size of the segment corresponds to the amount of memory that can be mapped by one L3 page table. The L3 page table contains 1,024 entries mapping 1,024 virtual pages in which each page is 8k bytes. Thus, the size of a segment of memory mapped by an L3 page table is 8 megabytes of virtual memory. As known to those skilled in the art, choosing a segment size may include considering other parameters in addition to the L3 page table size and the total amount of memory which is mapped by the L3 page table.

The segment data structure may be implemented using a variety of different data structures. One preferred embodiment implements the segment data structure as an array in which each entry corresponds to one segment. As part of the initialization of the segment data structure in step 72, the previously created shared data object is associated with the segment data structure.

In step 74, L3 page tables are allocated and initialized. In one embodiment, since the segment size chosen previously was equivalent to the amount of virtual memory which can be mapped by an L3 page table, each entry in the segment array is associated with one L3 page table. As will be seen in paragraphs that follow, the L3 page tables are used to map various portions of the shared data region into physical memory.

In step 76, an "id" corresponding to the entry number in the operating system list of shared data objects is returned to the user process. This "id" returned to the user process is further used in subsequent calls in management of the shared data object, as in the subsequent "shmat" call of step 62.

In some memory management schemes which use hierarchical multiple level page tables, various attributes are associated with the pages of physical memory mapped using a particular L3 page table. In one embodiment, one L3 page table is used to map those pages of virtual memory into physical memory which only allow read access to a user process. Similarly, a different L3 page table is used when a user process is allowed to read and write the pages mapped by the particular L3 page table. Thus, a second L3 page table may be associated with each segment entry, as in step 74, depending upon the types of access a user process has to a shared data region. For example, if one group of user processes accesses a shared data region with R-only access, a first L3 page table is created providing this type of access. Similarly, if a second group of user processes accesses the same shared data region but with R/W access, a different L3 page table is used and associated with each entry in the segment data structure. If multiple types of accesses to the shared data region are allowed, a user process may specify a type of access as a parameter in a routine call, such as in the "shmat" routine of previous CODE SEGMENT 1.

A preferred embodiment may also associate a threshold value with the technique currently being described herein used in the creation and management of shared data regions. As will become apparent to those skilled in the art from descriptions below, the threshold value is used to maximize the efficiency of computer system resources, such as memory 28 and CPU 20. Thus, the threshold value is generally chosen in accordance with other operating system parameters affected by the memory management of a shared data region.

In this embodiment, the threshold value is chosen in accordance with the segment size associated with an entry in the segment array, and also the amount of memory capable of being mapped by an L3 page table since user virtual address space is allocated in units of the segment size. In other words, the segment size is the minimum amount of user virtual address space which is allocated using this particular technique for implementing shared data regions. Additional segments are allocated as needed depending on the size of the shared data region to be created. -The number of segments associated with a shared data region is generally represented as follows:

$$\text{no. segments} = \text{INT (size\_of\_region/segment\_size)} + 1$$

In the foregoing formula, "no. segments" is the number of segments associated with a shared data region. This is computed by adding the constant "1" to the integer result obtained by dividing the size of the shared data region ("size\_of\_region") by the size of a segment ("segment\_size"). The integer result of the division operation is obtained by truncating any decimal portion of the result of the division operation (e.g., 1.234 produces an integer result of 1). Adding the constant "1" as the effect of rounding up to the next multiple of the segment size greater than the size of the shared data region ("size\_of\_region").

In one embodiment, the L3 page table maps 8 megabytes of memory and a single L3 page table contains 1,024 entries. If a user wishes to map only one page of memory using this technique, an additional 1,023 entries in the L3 page table would remain unused. To reduce resource inefficiency, a threshold value is typically chosen, and is varied and tuned depending on the implementation and the size of a segment of memory. If a user process wants to create a shared data region smaller than the size of the threshold value, an alternate technique may be used which incurs less overhead than the technique which is being described. An alternative technique will be described in conjunction with later figures.

The size of the shared data region to be created can be passed as an input parameter to the "shmget" routine call as illustrated in the previous CODE SEGMENT 1 corresponding to step 60 of FIG. 2B. Routines included in the operating system can use this parameter to appropriately select a memory management technique for implementing the shared data region requested by the user process if the size of a shared data region is less than the threshold value.

Referring now to FIG. 3B, an embodiment of the method of FIG. 3A is illustrated. FIG. 3B depicts operating system data structures as they appear after initialization of a shared data region as when a user process completes an "shmget" call corresponding to step 60 of FIG. 2B. Generally, the operating system data structures included in FIG. 3B are managed by the VM abstraction routines. Shown in FIG. 3B is an operating system list of shared data objects 78. Pointer 78a associates an entry in the operating system list of shared data objects with the created shared data object 80 corresponding to a shared data region. Pointer 80a associates the shared data object with the segment list 82. Segment list 82 is shown as comprising entries 82a-82n associated respectively with segments 1-n. Each of the entries of the segment list 82a-82n, respectively, contain a pointer, 83a-83n, to an L3 page table, 84a-84n.

After the initialization of various data structures associated with managing a shared data region as depicted in FIG. 3B, a user process attaches or is associated with the shared data region.

Referring now to FIG. 4A, an embodiment of a method for attaching to a shared data region, as at step 62, will now be described. These steps are performed when a user process attaches to the shared data region. As in step 86, a user process, such as one making an "shmat" call, is associated with previously created operating system data structures such as the shared data object 80. At step 88, the shared data region is mapped into the user process virtual address space such that the user process is able to access and address portions of the shared data region using the user process virtual address space. At step 90 a "handle" identifying a virtual address in user process space associated with the shared data region is returned to the user process. As will be seen in following paragraphs, this "handle" is used by a user process in further operations upon the shared data region. Recalling the previous CODE SEGMENT 1, "handle" is the routine parameter returned in the second routine call to "shmat" and is used in a subsequent routine call to perform data operations such as read and write.

Referring now to FIG. 4B, an embodiment of the various operating system data structures after performing the method steps of FIG. 4A is shown. Generally, FIG. 4B illustrates various operating system data structures after a user process performs the "shmat" call as in step 62 to attach to a shared data region previously initialized as in step 60. The management of the data structures included in FIG. 4B is generally performed by VM abstraction routines calling other routines, such as PMAP routines, as needed. However, the decision to allocate or modify these data structures is performed by the VM abstraction routines.

A process is identified by an operating system data structure 94. This is generally referred to as a process private data structure uniquely identifying a user process.

Associated with the user process are the various segments or portions of a user process. In this embodiment, a user process has associated with it a stack section 94b, a text section 94c and a shared data entry 94a. In the embodiment, the stack section and text section are used during execution of the user process P1, such as the text section 94c corresponds to machine executable code of the user process P1 which is executed by CPU 20.

One skilled in the art recognizes that the various VM abstraction data structures, such as 94a-94c, are dependent upon various aspects of the computing environment. In particular, data structures 94a-94c correspond to various portions of a machine executable program associated with the operating system of the computer system 12. A different operating system, such as one having a machine executable with a format different than that of the current embodiment, may result in different data structures corresponding to different program sections.

Element 38a illustrates the mapping of various program sections of a user process on to the user process virtual address space in an embodiment. Each of the previously described program sections, such as stack, text and shared data, are mapped into the user process virtual address space, as illustrated by elements 49, and 92b-92d. In other words, varying portions of the user process virtual address range are allocated in accordance with the size and number of program sections included in the user process, such as the shared data region 49 is mapped into the virtual address space 0-8k.

The virtual address space available to a user process ranges from ADD_MIN to ADD_MAX representing the user process virtual address range, as previously discussed in conjunction with element 38 of FIG. 1B. Virtual addresses typically represent an addressable unit of storage, such as a byte address location. The precise value of ADD_MAX varies with computing environment and represents the largest virtual address that a user process may address.

Associated with program section data structures 94a-94c are various VM abstraction data structures 80, 94d and 94e. The type of VM abstraction data structure associated with each program section data structure 94a-94c depends upon the type of program section. The data structure 94a of the shared data section is associated with the VM abstraction data type shared data object 80 as previously described. The stack program section data structure 94b is associated with a stack memory object 94d and the text program section data structure 94c is similarly associated with a corresponding text memory object 94e. For the sake of simplicity, various intricacies associated with the stack and text memory objects, respectively, 94d and 94e are not shown in FIG. 4B. The remainder of the data structures depicted in FIG. 4B are as previously described in conjunction with FIG. 3B.

Subsequent to initializing the necessary operating system data structures and the user processing attaching to a shared data region, the user process typically accesses an address within the shared data region to perform a data operation such as a read or write as in step 64.

Referring now to FIG. 5A, an embodiment of a method used to access data located at a virtual address within a previously initialized shared data region will be described. The method generally illustrates memory management techniques used to address a page fault that occurs when attempting to access data within a shared data region.

At step 96, a segment which includes the virtual address being accessed is determined. As previously described, a segment list includes one or more segments depending on the size of the shared data region. At step 97, a determination is made as to whether or not the vm_anon array exists. The vm_anon array is a data structure used within the memory management software to keep track of where virtual pages actually reside, such as whether data for a corresponding virtual page resides on a swap device or resides in a particular page of physical memory. At step 97 a decision is made as to whether or not this array exists.

If the vm_anon array does not exist, at the vm_anon array is allocated at step 98 and initialized to be used in memory management of the shared data region. At step 100 the vm_anon array is updated mapping the requested virtual page to the location of where the data resides in physical memory. One skilled in the art recognizes that step 100 includes various memory management tasks, such as allocating a page of physical memory from a free list when necessary, bringing into physical memory a virtual page which includes an address that currently resides on a swap device that has been paged out as well as updating, and initializing various data structures including the entries of the vm_anon array as needed.

Those skilled in the art have knowledge of various memory paging techniques, such as those typically used in allocating physical memory for memory management. One such technique, for example, is the least recently used technique to determine which page of physical memory is swapped out of physical memory to a secondary storage or swap device in accordance with a physical memory allocation request when there are no pages of physical memory available for use.

At step 101 a memory resident virtual page list is updated. An embodiment may, for the sake of efficiency, maintain the memory resident virtual page list in addition to the vm_anon array. The memory resident virtual page list may be used in performing various management operations, such as when swapping out memory resident pages of the shared data region.

At step 102 the various page table entries of the page table hierarchy associated with the particular virtual address being accessed are determined, such as by making a call to a system routine. In one preferred embodiment, a page table hierarchy includes three levels of page tables. When accessing data in a shared region, a page fault may occur due to a page table entry within a level 1 page table, (L1 page table), a level two page table (L2 page table), or a level three page table (L3 page table). Hereinafter, if a page fault is caused by an L1 page table entry, it is referred to as an "L1 page fault". If a page fault is caused by an L2 page table entry, it is referred hereinafter as an "L2 page fault". Similarly, if a page fault is caused by an L3 page table entry, it is hereinafter referred to as an "L3 page fault".

At step 103, a determination is made as to whether or not there has been an L1 page fault. If there has been an L1 page fault, control proceeds to step 104a where an L2 page table is allocated. At step 104b, the L1 page table entry is updated to identify the L2 page table previously created in step 104a.

In step 105a, a determination is made as to whether an L2 page fault has occurred. If at step 105a a determination is made that an L2 page fault has occurred, control proceeds to step 105b where an L3 page table is allocated if the segment previously identified in step 96 does not have an associated L3 page table. At step 106, the L2 page table entry is updated to identify the L3 page table created in step 105b.

In step 107 the user process is added to a list of user processes as maintained in the segment data structure previously described. A list of user processes may be used in various memory management tasks such as determining when a shared data segment is no longer accessed by a user process. A particular memory management technique may take advantage of this fact when, for example, operating system garbage collection is performed to reclaim storage associated with an unused operating system data structure.

Another example illustrating a use of the list of user processes is an embodiment having multiple CPUs. The list of user processes provides a means of updating copies of physical pages which are maintained in caches of the various CPUs. When a page of physical memory, for example, is "swapped out" (removed from physical memory to a secondary storage device) or has its protections changed, various copies of the page maintained in the caches of the CPUs in the computer system must also be accordingly updated. The user process list provides a means of finding out which processes executing in which CPUs need to be sent an interrupt to update cache information.

At step 108 a determination is made as to whether there is an L3 page fault. If a determination is made at step 108 that an L3 page fault has occurred, control proceeds to step 109 at which a shared data region is identified as a user of the physical page associated with the virtual address being accessed. This information identifying the shared data region as a user is added to the physical-to-virtual memory map which will be described in more detail in conjunction with FIG. 8B. Generally, the physical-to-virtual memory map is a data structure identifying a user of a page of memory, such as a shared data region or user process, mapping a virtual address within its virtual address space to a particular physical page.

At step 110, the L3 page table entry is updated to associate physical memory with the requested virtual page. In other words, the virtual address being accessed is located within a corresponding virtual page having the page table entry in the L3 page table. This virtual page table entry is updated in step 110.

Referring now to FIG. 5B, an embodiment illustrating various operating system data structures after a user process performs a data operation, such as a read or write, accessing the shared data region using the method of FIG. 5A is shown. Generally, the management of the data structures included in FIG. 5B is performed by the VM abstraction routines. FIG. 5B depicts a process which performs a first access to the shared data region. In other words, no other process has attempted to access the shared data region since the creation and initialization of the shared data region, as in steps 60 and 62 of FIG. 2B.

FIG. 5B illustrates the state of various memory management data structures when a user process executes the steps from FIG. 5A in which a first access to a segment of a shared data region occurs. The elements of FIG. 5B will now be described in conjunction with corresponding steps of FIG. 5A.

The shared data object 80 contains pointer 80b identifying a list of memory resident virtual pages 80c. This list is updated in step 101. As previously described, pointer 80a associates a shared data object 80 with a segment list 82.

When a user process accesses data within a virtual page of a particular segment entry such as 82a, various data structures are created and associated with that particular segment entry. In this particular instance, user process P1 94 accesses data within a shared data region located in two virtual pages in the first segment associated with segment entry 82a. In this example, a first access to this segment of the shared data region occurs causing creation of the vm_anon array 116, adding a process identifier 114c to the user process list, and updating the L3 page table 84a. The vm_anon array is associated with segment entry 82a via pointer 114a. The user process list contains a single element 114c describing user process P1 94. This user process list is associated with segment entry 82a via pointer 114b.

The L3 page table 84a includes two page table entries 122a and 122b. In this particular instance, user process P1 is accessing a virtual address located within virtual pages associated with page table entries 122a and 122b. Each of these page table entries is associated with a particular page in physical memory allocated, as included in step 100. Page table entries 122a and 122b are updated, as in step 110, and associated with corresponding pages in physical memory. In this particular instance, page table entry 122a is associated with a page of physical memory 120a via pointer 118. Similarly, page table entry 122b is associated with a physical page in memory 120b via pointer 118b. A process identifier 114c is added to the user process list via pointer 114b. This list of user processes is updated in step 107 of FIG. 5A.

The vm_anon array 116 is associated with segment entry 82a via pointer 114. This is the vm_anon array created at step 98 when a determination is made that a vm_anon array does not exist which corresponds to the particular segment entry being accessed. The vm_anon array associated with a segment may be created upon a first access to a virtual address within a virtual address range as defined for the particular segment. In this instance, user process P1 94 is accessing virtual addresses within the first 8 megabyte portion of the shared data region causing the creation of the vm_anon array 116.

The vm_anon array is an array of pointers to vm_anon structures or records 116a and 116b. Each of the vm_anon structures or records maps a page within the virtual address range associated with segment entry 82a to its proper physical location. For example, each entry within the vm_anon array corresponds to a particular page table entry within the L3 page table 84a. vm_anon entry 116g corresponds to page table entry 122a and vm_anon array entry 116h corresponds to page table entry 122b. vm_anon array entry 116g is associated with structure or record entry 116b via pointer 116d. Similarly, vm_anon record 116a is associated with vm_anon array entry 116h via pointer 116c.

Each of the vm_anon structures or records 116a and 116b points to another corresponding data structure that describes the actual location and physical device upon which the data associated with the corresponding virtual page is located. In this embodiment, vm_anon structure 116b is associated with VM page data structure 124a via pointer 116e. Similarly, the vm_anon structure 116a is associated with another VM page data structure 124b via pointer 116f. In this particular embodiment, each VM page data structure is associated with a physical page of memory. These VM page data structures are allocated at operating system boot time and included in the underlying implementation and memory management technique of an operating system in the preferred embodiment. VM page data structure 124a is associated with physical page 120a. Similarly, VM page data structure 124b is associated with physical page 120b. Generally, the vm_anon array data structure describes not only pages in physical memory where data may reside, but also other physical locations where data may reside, as on a swap device. In other words, if a particular portion of this data were located on a swap device, the vm_anon structure would point to a different data structure rather than a VM page data structure 124a or 124b. The different data structure would similarly describe the physical location on a particular swap device where a page of data is stored.

As will be recognized by one skilled in the art, other data structures besides the vm_anon array data structure may be used with varying memory management techniques to keep track of where a virtual page resides upon a physical device. The data structures used within a particular embodiment may vary with, for example, the operating system and devices available in a computing environment of the computer system 12.

FIGS. 6A and 6B depict memory management data structures in an embodiment after two processes access a shared data region using the method steps of FIG. 5A. FIG. 6A generally includes those data structures as managed by VM abstraction routines. FIG. 6B depicts data structures which are typically dependent upon underlying hardware of the computer system 12.

Referring now to FIG. 6A, an embodiment of a block diagram of various operating system data structures controlled by the VM abstraction routines after two processes access a shared data region is depicted. In this particular instance, a first user process P1 94 and a second user process P2 130 access the shared data region. When user process P2 performs a data operation such as a read/write as in step 64 of FIG. 2B, its shared data entry 132 is associated with shared data object 80 via pointer 132c. Note that the shared data object 80 is commonly used by user processes P1 94 and P2 130 while both processes are accessing the shared data region corresponding to shared data object 80.

Relating the data structures of FIG. 6B to the method steps of FIG. 5A, when user process P2 130 accesses an address within a shared data region, a page fault occurs. In this particular instance, a determination is made at step 105a that an L2 page fault has occurred. Thus, when process P2 performs an access to shared data region, steps 105b-107 of FIG. 5A are performed. Recall that step 107 adds a user process to a list of user processes within the segment data structure. This is illustrated by the addition of process identifier P2 134 to the user process list which is associated with segment entry 82a. As performed in step 106, updating the L2 page table of process P2 130 will be described in conjunction with FIG. 6B in paragraphs below.

Referring now to FIG. 6B, an embodiment illustrating various data structures as operated upon by PMAP routines after two processes access the shared region is shown. Generally, FIG. 6B includes those operating system data structures which are independent of a particular operating system. Associated with user process P1 94 is a three level page table data structure comprising an L1 page table 136a, an L2 page table 138a and an L3 page table 84a. Similarly, associated with process P2 130 is a page table data structure comprising an L1 page table 136b, an L2 page table 138b and the L3 page table 84a.

Relating the data structures of FIG. 6B to the method steps of FIG. 5A, when process P1 initially accesses the shared data region, execution of step 110 in which the L3 page table is updated causes the creation of pointers 118a-b and 140c. Pointers 118a and 118b were previously described in conjunction with FIG. 5B. Not previously illustrated is pointer 140c which associates the L2 page table entry 144a with the L3 page table 84a.

When process P2 130 executes and performs an access to an address within the shared data region with a data operation such as a read or write, an L2 page table fault previously described occurs. The creation of pointer 142c results from executing step 106 when process P2 performs an access to the shared data region thereby associating page table entry 144b with the L3 page table 84a.

In this embodiment, the method steps of FIG. 5B, as performed in accordance with the data structures depicted in Figs. 6A and 6B, are allocated between the PMAP and VM abstraction routines. The VM abstraction routines generally manage and control the abstract operating system dependent data structures. In this preferred embodiment, L3 page tables are managed by the VM abstraction routines in that the VM abstraction routines call other PMAP routines at appropriate times.

When attempting a first access to a shared data region, the VM abstraction routines call underlying PMAP routines to perform certain tasks. For example, the VM abstraction routines call PMAP routines to operate upon the L3 page table 84a. The PMAP routines modify the L3 page table 84a and its corresponding entries 122a and 122b to point to the correct physical memory location 120a and 120b. The VM abstraction routines also call a PMAP routine to add the user process 114c to the user process list as connected to a particular segment entry 82a.

PMAP routines modify L3 page table entries such as by adding pointers 118a and 118b associating page table entries 122a and 122b, respectively, with physical memory locations 120a and 120b. Additionally, the PMAP routines are called by various VM abstraction routines to add process identifiers 114c and 134 to the user process list. PMAP routines also update the user process L2 page table as in the creation of pointers 140c and 142c. The VM abstraction routines allocate the physical page from memory using the various memory allocation schemes depending upon the particular computing environment and underlying algorithms and techniques used therein. Thus, the VM abstraction routines perform step 98 and indirectly use PMAP routines to perform other steps such as 100, 110 and 112.

Referring now to FIG. 7A, an embodiment of a method for performing a detach of a user process from a shared data region as in step 66 of FIG. 2A is illustrated. A user process detaches from a shared data region, for example, when the user process exits or completes execution within a computer system 12. As in step 150, when a user process detaches from a shared data region, the user process' program section entry corresponding to the shared data region is identified. For example, referring back to FIG. 6A, the shared data entry 94a is located amongst the linked list of data structures corresponding to various program segments or sections of user process P1 94. In this particular instance, the shared data entry is 94a located at the front of the program section list.

Element 160 identifies steps included in a program loop to traverse the list of segment entries and detach or disassociate the user process from each segment entry. At step 152 a determination is made as to whether there is another segment. If all entries of the segment entry list have not yet been traversed, control proceeds to step 154 in which the user process' L2 page table is disassociated with the shared data region L3 page table. This disassociation may be performed, for example, by reinitializing the L2 page table entry identifying the L3 page table associated with a particular segment entry.

In step 156 the user process identifier is deleted from the user process list associated with the segment entry. In this particular embodiment, the list of user processes is in the form of a linked list. Thus, the linked list of user process identifiers is traversed until a corresponding match for the user process currently detaching from the shared data region is located. The entry corresponding to the user process currently detaching is subsequently deleted from the linked list using data structure management techniques known to those skilled in the art. Similarly, if a different data structure was used to implement the list of user processes associated with this particular segment entry, different data structure management techniques are used. Control then proceeds back to step 152 where a subsequent determination is made as to whether there are additional segment entries in the list yet to be traversed. When the list has been completely traversed, control then proceeds to step 158.

Referring now to FIG. 7B, an embodiment including operating system data structures after a user process detaches by executing the method steps of FIG. 7A is shown. The management of the data structures in FIG. 7B are generally controlled by the VM abstraction routines. In this instance, user process P1 94 detaches from a shared data region. Execution of step 156 deletes user process identifier 114c from the linked list of user process identifiers associated with segment entry 82a. Execution of step 158 disassociates shared data object 80 with the user process P1 by dissolving pointer 94f which associates the shared data entry 94a with the shared data object 80.

One skilled in the art recognizes that additional steps are required in maintaining the list of program section entries, such as 94b and 94c, when 94a is deleted from the list. Depending upon memory collection techniques, the shared data entry 94a may also be deallocated thereby freeing physical and virtual memory for use in performing other operating system functions.

Referring now to FIG. 7C, an embodiment of data structures associated with physical memory mapping (as operated upon by the PMAP routines) after performing the steps of FIG. 7A is illustrated. With regard to the physical memory mapping, in step 154 the L2 page table is disassociated with the shared data segment L3 page table. In this particular instance, user process 194 detaches from the shared data segment and, upon execution of step 154, pointer 140c is deleted due to the reinitialization of page table entry 144a of the L2 page table 138a.

The following code segment illustrates in pseudo code the steps of FIG. 7A when a user process detaches from a shared data region.

```
                         CODE SEGMENT 2

    vm_abstraction routine logic:

    locate entry on user process entry list; /*step 150*/

    for I = 1 to max seg

    {pmap_unmap (segment I);} /*here segment_size

                                   = 8  megabytes*/


    pmap_unmap routine logic:

    disconnect shared data region L3 page table from user

         process;                          /* step 154 */

    delete user process identifier from user process list

    associated with segment entry;      /* step 156 */
```

In the foregoing code segment, an embodiment in illustrating a division of tasks in performing the steps of FIG. 7A is illustrated. Particular tasks are allocated to VM abstraction routines and other tasks are allocated to various PMAP routines. In keeping with the general division of tasks previously described thus far in this preferred embodiment, the PMAP routines perform operations upon data structures which are generally dependent upon underlying system hardware. In contrast, the VM abstraction routines operate in accordance with operating system dependencies often using the PMAP routines to perform lower level memory management operations. The VM abstraction routine logic includes performing steps 150 and includes the outer shell for loop 160 in which an underlying PMAP routine is called to perform the steps within loop 160. The underlying PMAP routine, pmap_unmap performs steps 154 and 156 of FIG. 7A dissolving the various pointers creating the association between the user process and the shared data region. Again, in this embodiment note that the VM abstraction routine controls the unmapping of the L3 page table which is typically a task not allocated to a VM abstraction routine.

As will be apparent to those skilled in the art, a different division of tasks between the VM abstraction routines 46 and the PMAP routines 44 may exist in a preferred embodiment of the invention.

An additional operation that a user process may perform is removing a shared data region from the computer system 12. Removal of a shared data region is an operation that may be performed by a user process, for example, when the shared data region is no longer needed for interprocess communication. A preferred embodiment includes another routine in the user routines 45 of FIG. 1B to perform the removal. A user process includes a call to this routine which is similar to those routines previously described in CODE SEGMENT 1. A removal routine may be needed in a preferred embodiment to perform various operations, such as deallocation of operating system data structures previously created in conjunction with initializing a shared data region.

Referring now to FIG. 7D, an embodiment of a method for removing a shared data region from computer system 12 is shown. At step 146a, a determination is made as to whether the data region for which a user process requests removal is currently in use by another user process. If a determination is made that the data region is currently in use by another user process, the shared data region is marked for removal, as in step 146b. The shared data region is subsequently removed at a later time, for example, when no user processes access the shared data region.

If a determination is made at step 146a that the data region is currently not in use by another user process, memory deallocation occurs, as in step 146d. Operating system data structures associated with the shared data region, such as those in conjunction with the initialization of the shared data region, are deallocated.

As previously discussed in conjunction with FIG. 3B, a threshold value is used for the size of the shared data region to be created. If a shared data region to be created is less than the threshold value, a preferred embodiment includes an alternate technique for implementing the shared data region which is better suited for shared data regions of this size.

Referring now to FIG. 8A, an embodiment of an alternate technique that may be used to implement shared data regions which are less than a threshold value is described. FIG. 8A illustrates the operating system data structures involved in the alternate technique in which two processes P1 and P2 are currently accessing two pages of a shared data region. A preferred embodiment typically allocates the management of these data structures to the PMAP routines. As will become apparent from paragraphs that follow, in the alternate technique, the VM abstraction routines are not included in the management of the L3 page tables.

User process data structure P1 150a is shown connected through pointer 152a to a three level page table hierarchy. The three level page table structure has associated with it an L1 page table 154a connected to an L2 page table 158a which is subsequently connected to an L3 page table 162a. The L3 page table 162a maps a virtual page to a physical page 166a via pointer 164a for a particular page table entry 164c. Similarly, a user process operating system data structure 150b associated with a user process P2 is associated via pointer 152b to a different three level page table data structure. User process P2 is associated via pointer 152b to another three level page table data structure including an L1 page table 154b, an L2 page table 158b and an L3 page table 162b. The L3 page table 162b maps a virtual page to a physical page, such as page table entry 164d maps a corresponding virtual page to physical page 166a in physical memory 120.

A few points about FIG. 8A should be noted comparing this alternate technique with the previously described technique used with shared data regions having a size of at least the threshold value. In the alternate technique, each user process operating system data structure associated with a user process has its own L3 page table for a shared data region. In other words, operating system data structure 150a corresponding to user process P1 is associated with a unique process private L3 page table 162a. Similarly in the alternate technique, user process operating system data structure 150b corresponding to user process P2 is associated with a different process private L3 page table 162b.

This feature is in direct contrast to features previously described in conjunction with the technique used in managing shared data regions which are at least the size of the threshold value in which L3 page tables are shared amongst user processes accessing a shared data region. For example, in conjunction with FIG. 6B, L3 page table 84a is shared amongst multiple user processes P1 and P2 accessing a shared data region. Additionally, due to the fact that no L3 page tables are shared in conjunction with a shared data region, as will become more apparent in discussion with FIG. 8B, a preferred embodiment of the alternate technique the VM abstraction routines do not control the operation or management of the L3 page table when performing data management operations for accessing the shared data region, as in the previously described technique. Thus, the PMAP and VM abstraction routine task allocation is different in the alternate technique as compared with the technique previously described for implementing shared data regions of at least at threshold size.

Referring now to FIG. 8B, an illustration of other operating system data structures managed by the VM abstraction routines is shown for the example alternate technique previously described in conjunction with FIG. 8A. User process data structures corresponding to process P1 150a and process P2 150b are shown. User process data structure 150a is associated with a shared data entry 172a which defines what portion of the virtual address space for the user process P1 are associated with the particular shared data region corresponding to the shared data entry 172a. Similarly, user process data structure 150b is associated with its shared data entry 172b identifying which virtual address portions of user process correspond to the shared data region. Process P1 is associated with a shared data object type 174 via pointer 172c. Similarly, user process P2 is also associated with shared data object type 174 via pointer 172d. This shared data object type 174 is similar in function to the shared data object previously described in conjunction with element 80 of FIG. 3B. As previously discussed, shared data object type 174 represents an abstract data type dependent upon underlying operating system techniques and structure. The shared data object type 174 connects those operating system data structures associated with a user process to other operating system data structures associated with a particular shared data region being shared amongst user processes, such as user process P1 and P2.

Shared data object type 174 is associated with a list of memory resident virtual pages 178. Each entry in the list 178 identifies a particular virtual page within the shared data segment that resides in physical memory. Each entry in the memory resident virtual page list 178 is associated with one or more data structures 176 performing a physical to virtual memory mapping. Generally, element 176 abstractly represents the data structure or data structures mapping a memory resident virtual page to its corresponding physical page.

Each entry of the physical-to-virtual memory map data structure 176 maps a particular virtual page, such as one associated with an entry of the memory resident virtual page list 178, to a corresponding physical page. Each entry, such as 166a and 166b, is associated with a list of user processes on a per virtual page basis. In other words, a user process list is maintained for each virtual page mapped by data structure 176. In this particular illustration, user process P1 and user process P2 appear on the user process list associated with two virtual pages in which each of the two virtual pages corresponds, respectively, to data structure entries 166a and 166b.

The physical-to-virtual memory map 176 indicates, using the user process lists described above, users of a given physical page, such as a shared data region or a user process may be users of a physical page.

By contrasting and comparing various features of the alternate technique as used with shared data regions less than a threshold size (alternate technique) and the previously described technique used with shared data regions of at least a threshold size (previously described technique), it will become apparent to one skilled in the art how using these two techniques in accordance with the size of the shared data region promotes efficient use of system resources.

Comparing a feature of the alternate technique using one user process list per virtual page with a comparable feature of the previously described technique storing one user process list per segment, one can generally conclude that as the size of the shared data region increases, so does the inefficiency of the alternate technique. Thus, as the size of the shared data region increases, so does the efficiency and appropriateness of the previously described technique. For shared data regions greater than a threshold value, using the previously described technique rather than the alternate technique to manage shared data segments promotes efficient use of system resources by decreasing the memory and execution time associated with management of the user process lists. Referring to the previously described technique of the foregoing embodiment, a segment corresponds to multiple virtual pages, such as an 8 megabyte segment corresponding to 1,024 virtual pages. Thus, a single user process list in the previously described technique is maintained for each 8 megabyte segment, as opposed to the alternate technique in which one user process list is associated with a single virtual page of the shared data region.

Comparing the minimum allocation size of a segment of the previously described technique with the minimum allocation size in the alternate technique, further efficiency of computer system resources is promoted. The previously described technique has a minimum allocation size dependent upon the amount of virtual address space mapped by an L3 page table. In the previously described embodiment, this is 8 megabytes (1024 page table entries * 8K bytes per page = 8 megabytes). In contrast, the alternate technique has a much smaller granularity and much smaller minimum allocation size of one page. In other words, for a shared data region using the previously described technique rather than the alternate technique, the granularity and minimum amount of user process virtual address space allocated is 8 megabytes. For shared data regions smaller than this threshold size of 8 megabytes, it is typically a waste of virtual address to use the previously described technique rather than the alternate technique. For example, if the shared data region occupies 16k bytes or 2 virtual pages using the previously described technique rather than the alternate technique, 1,022 pages of virtual address space within the user process would be allocated but unavailable for use since it would be allocated for use with a shared data region which only occupied two virtual pages. Thus, a preferred embodiment of the invention should include an alternate technique as described for use in accordance with a threshold value tuned for the particular implementation of the shared data region to promote efficient use of system resources such as user virtual address space.

The foregoing description affords a flexible and efficient way of implementing shared data segments having a variety of different data accesses such as read-only and read-write by incorporating the use of the threshold value for use in the memory management techniques of shared data segments. The foregoing technique can easily be tuned for a particular implementation in accordance with a variety of operating system and computing system environments while simultaneously providing efficient management of system resources such as user process virtual address space and operating system memory when performing memory management operations used in conjunction with shared data regions.

Benefits of the foregoing previously described technique used with shared data regions of at least a threshold size become more apparent for larger shared data regions with a large number of user processes accessing the shared data region. One existing implementation of a shared data region always uses the alternate technique described herein in managing a shared data region in which a list of user processes is stored on a per page basis, rather than on a per segment basis. Thus, this existing implementation does not have the efficiency of the preferred embodiment.

Techniques used in the previously described embodiments generally improve run time performance for various operations in the management of the shared data region, such as in the performance of a detach operation. As previously described, an existing system stores a list of user processes for each virtual page as in the alternate technique regardless of shared data region size. Thus, when a user process detaches from a large shared data region, the existing system requires more CPU time to search the user process lists.

Improved run time performance of the preferred embodiment over existing technique can also be seen with the shared page table arrangement when a page fault occurs, in particular, if a page table associated with a segment is fully populated. In the preferred embodiment, when a page fault occurs, all of those virtual pages associated with that segment are loaded into physical memory (i.e., become memory resident). Thus, one page fault causes all of the physical pages associated with a segment to be brought into memory generally reducing the number of future page faults. In existing systems, a single page fault results in only a single page being brought into memory, thereby neither affecting subsequent accesses to other virtual pages nor decreasing the number of page faults.

Having described preferred embodiments of the invention, it will now become apparent to those of skill in the art that other embodiments incorporating its concepts may be provided. It is to be understood, therefore, that the scope of this invention is not intended to be limited to the disclosed embodiments, but should be extended as can be understood by the scope of the invention in its broad form.

## Claims

1. A method of sharing a data region among a plurality of processes executing in a computer system, the method comprising the steps of:

   allocating a page table mapping a portion of said data region, said page table used in performing virtual to physical address translations for physical memory locations within said portion of said data region;
   associating said page table with a first of said plurality of processes in response to a request by said first process to be associated with said data region; and
   associating said page table with a second of said plurality of processes in response to a request by said second process to be associated with said data region.

2. The method of claim 1, wherein said page table includes one or more page table entries, each of said page table entries identifying a corresponding storage location for a portion of said data region accessed by one of said plurality of processes, and said method further comprising the steps of:

   validating a first of said page table entries in response to a first of said plurality of processes accessing a data location within said portion of said data region;
   allocating a physical memory location corresponding to said data location, said data location having a virtual address mapped to said physical memory location using said first page table entry; and
   updating a process private location identifying said page table as being used by said first process, wherein said process private location is a first process private location, and the method further comprising the steps of:

      including a first identifier corresponding to said first process on a list associated with said page table, said first identifier identifying said first process as a user process of said data region;
      accessing another data location within said portion of said data region by a second of said plurality of processes;
      updating a second process private location identifying said page table as being used by said second process; and
      including a second identifier corresponding to said second process on said list associated with said page table, said second identifier identifying said second process as a user process of said data region.

3. The method of claim 2, wherein said first and second processes access said data location with a first type of data access, wherein said first type of data access is read and write access and a read-only access to said data region.

4. The method of claim 2, wherein a multiple level page table data structure comprises a plurality of page tables, said page table is a first level of said multiple level page table data structure, said process private location is an entry included in another page table which is a second level of said multiple level page table data structure.

5. The method of claim 2 further comprising the steps of:

   disassociating said first process with said page

table by updating said first process private location indicating that said page table is no longer in use by said first process; and

removing said first identifier from said list, said method further comprising the step of removing said data region in response to a request by one of said plurality of processes, said step of removing said data region comprising the steps of:

marking said data region for removal if any of said plurality of processes is using said data region;

deallocating said data region to free physical memory associated with said data region when said data region is not being used by any of said plurality of processes; and

deallocating said page table to free physical memory associated with said page table when said data region is not being used by any of said plurality of processes.

6. The method of claim 2, wherein said process private location is a first process private location, said first process accesses said data region with a first type of data access, and said page table is a first page table, and the method further comprising the steps of:

including a first identifier corresponding to said first process on a list associated with said first page table, said first identifier identifying said first process as a user process of said data region;

accessing another data location within said portion of said data region by a second of said plurality of processes, said second process accessing said data region with a second type of data access different from said first type of data access;

allocating a second page table associated with said portion of said data region;

validating for use a page table entry within said second page table wherein said second page table includes one or more page table entries, each of said page table entries identifying a corresponding storage location for a portion of said data region accessed by a one of said plurality of processes;

updating a second process private location, identifying said second page table as being used by said second process; and

including a second identifier corresponding to said second process on a list associated with said second page table, said second identifier identifying said second process as a user process of said data region, wherein said first type of data access is read and write access to said data region and said second type of data access is read-only access to said data region.

7. The method of claim 1, wherein a threshold value is associated with said data region, said threshold value representing a minimum size of said data region, said allocating step being performing in response to a request by one of said plurality of processes requesting creation of said data region, said request including a size of said data region in which the method steps of Claim 1 are performed if said size is at least said threshold value, wherein an alternative method for sharing a data region is performed if said size is less than said threshold value.

8. The method of claim 1, wherein said computer system includes a plurality of processors, a data base application is executing in said computer system as a server process, two or more user processes are executing in said computer system as client processes issuing requests to said server process to access said data region.

9. A data structure stored in a memory for managing a shared data region among a plurality of processes executing in a computer system, said data structure comprising:

a first page table associated with a current portion of said shared data region, said first page table used in performing virtual to physical address translations for one of said plurality of processes when said one process attempts to access a data location within said current portion of said data region, a first and a second of said plurality of user processes being associated with said first page table;

a second page table associated with said first user process and said first page table, said second page table used in performing virtual to physical address translations for said first user process;

a third page table associated with said second user process and said first page table, said third page table used in performing virtual to physical address translations for said second user process; and

a segment list associated with said shared data region, each entry of said segment list corresponding to a portion of said shared data region, one of said entries of said segment list corresponding to said current portion and being associated with said first page table.

10. The data structure of claim 9, wherein said one entry of said segment list is associated with a list of user processes using said current portion of said shared data segment, said first and said second user process being included in said list of user processes when using said portion of said shared data segment, wherein said shared data segment is associated with one or more virtual pages stored in physical memory, and said one entry of said segment list is associated with a list indicating where in physical memory each of said one or more virtual pages resides.

11. A memory included in a computer system, the memory comprising:

an allocator for allocating a page table that maps a portion of a data region, said page table used in performing virtual to physical address translations for physical memory locations within said portion of said data region, said data region shared among a plurality of processes;

means for associating said page table with a first of said plurality of processes in response to a request by said first process to be associated with said data region; and

means for associating said page table with a second of said plurality of processes in response to a request by said second process to be associated with said data region.

12. The memory of Claim 11, wherein said page table includes one or more page table entries, each of said page table entries identifying a corresponding storage location for a portion of said data region accessed by one of said plurality of processes, and said memory further comprising:

a validator for validating a first of said page table entries when a first of said plurality of processes accesses a data location within said portion of said data region;

an allocator for allocating a physical memory location corresponding to said data location, said data location having a virtual address mapped to said physical memory location using said first page table entry; and

means for updating a process private location identifying said page table as being used by said first process.

13. The memory of claim 12, wherein said process private location is a first process private location, and the memory further comprises:

means for including a first identifier corresponding to said first process on a list associated with said page table, said first identifier identifying said first process as a user process of said data region;

means for accessing another data location within said portion of said data region by a second of said plurality of processes;

means for updating a second process private location identifying said page table as being used by said second process; and

means for including a second identifier corresponding to said second process on said list associated with said page table, said second identifier identifying said second process as a user process of said data region.

14. The memory of claim 13, wherein said first and second processes access said data location with a first type of data access, and wherein said first type of data access is chosen from a read and write access and a read-only access to said data region.

15. The memory of claim 13, wherein a multiple level page table data structure comprises a plurality of page tables, said page table is a first level of said multiple level page table data structure, said process private location is an entry included in another page table which is a second level of said multiple level page table data structure.

16. The memory of claim 13 further comprising:

means for disassociating said first process with said page table by updating said first process private location indicating that said page table is no longer in use by said first process; and

means for removing said first identifier from said list.

17. The memory of claim 16 further comprising means for removing said data region which operates in response to a request by one of said plurality of processes, said means for removing said data region comprising:

means for marking said data region for removal if any of said plurality of processes is using said data region;

means for deallocating said data region to free physical memory associated with said data region when said data region is not being used by any of said plurality of processes; and

means for deallocating said page table to free physical memory associated with said page table when said data region is not being used by any of said plurality of processes.

18. The memory of claim 12, wherein said process private location is a first process private location, said first process accesses said data region with a first type of data access, and said page table is a first page table, and the memory further comprises:

means for including a first identifier corresponding to said first process on a list associated with said first page table, said first identifier identifying said first process as a user process of said data region;

means for accessing another data location within said portion of said data region by a second of said plurality of processes, said second process accessing said data region with a second type of data access different from said first type of data access;

means for allocating a second page table associated with said portion of said data region;

means for validating for use a page table entry within said second page table wherein said second page table includes one or more page table entries, each of said page table entries identifying a corresponding storage location for a portion of said data region accessed by a one of said plurality of processes;

means for updating a second process private location identifying said second page table as being used by said second process; and

means for including a second identifier corresponding to said second process on a list associated with said second page table, said second identifier identifying said second process as a user process of said data region.

19. A method of managing a shared data region in a memory among a plurality of processes executing in a computer system, said method comprising the steps of

storing a first page table associated with a current portion of said shared data region, said first page table used in performing virtual to physical address translations for one of said plurality of processes when said one process attempts to access a data location within said current portion of said data region, a first and a second of said plurality of user processes being associated with said first page table;

storing a second page table associated with said first user process and said first page table, said second page table used in performing virtual to physical address translations for said first user process;

storing a third page table associated with said second user process and said first page table, said third page table used in performing virtual to physical address translations for said second user process; and

storing a segment list associated with said shared data region, each entry of said segment list corresponding to a portion of said shared data region, one of said entries of said segment list corresponding to said current portion and being associated with said first page table.

20. The method of claim 19, wherein said one entry of said segment list is associated with a list of user processes using said current portion of said shared data segment, sad first and said second user processes being including in said list of user processes when using said portion of said shared data segment, wherein said shared data segment is associated with one or more virtual pages stored in physical memory, and said one entry of said segment list is associated with a list indicating where in physical memory each of said one or more virtual pages resides.

FIG. 1A

<u>35</u>

OPERATING SYSTEM
VIRTUAL MEMORY

36

| | |
|---|---|
| OPERATING SYSTEM DATA STRUCTURE | 42 |
| PMAP ROUTINES | 44 |
| USER INTERFACE ROUTINES | 45 |
| VM ABSTRACTION ROUTINES | 46 |
| ⋮ | |
| USER PROCESS | 48 |
| SHARED DATA REGION | 49 |
| ⋮ | |

USER
VIRTUAL
MEMORY
38

FIG. 1B

50

63            52     54     56      58   0

| | LEVEL-1 | LEVEL-2 | LEVEL-3 | BYTE WITHIN PAGE |
|---|---|---|---|---|
| 21 BITS | 10 BITS | 10 BITS | 10 BITS | 13 BITS |

# FIG. 2A

```
INTIALIZATION FOR
SHARED DATA          —60
REGION (SHMGET)
```

↓

```
ATTACH TO
SHARED DATA          —62
REGION (SHMAT)
```

↓

```
ACCESS ADDRESS
IN SHARED DATA       —64
REGION. (READ,WRITE)
```

↓

```
DETACH FROM
SHARED DATA          —66
REGION (SHMDT)
```

# FIG. 2B

60

```
┌─────────────────────────┐
│   ALLOCATE OPERATING    │
│   SYSTEM SHARED DATA    │──68
│        OBJECT           │
└─────────────────────────┘
            │
            ▼
┌─────────────────────────┐
│   ASSOCIATE SHARED DATA │
│   OBJECT WITH OPERATING │──70
│   SYSTEM LIST OF SHARED │
│        OBJECTS          │
└─────────────────────────┘
            │
            ▼
┌─────────────────────────┐
│   ALLOCATE AND INITIALIZE│──72
│   SEGMENT DATA STRUCTURE │
└─────────────────────────┘
            │
            ▼
┌─────────────────────────┐
│   ALLOCATE AND INITIALIZE│──74
│      L3 PAGE TABLES     │
└─────────────────────────┘
            │
            ▼
┌─────────────────────────┐
│ RETURN "ID" CORRESPONDING│
│   TO ENTRY IN OPERATING │──76
│   SYSTEM LIST OF SHARED │
│   DATA OBJECTS TO USER  │
└─────────────────────────┘
```

FIG. 3A

FIG. 3B

62

ASSOCIATE USER PROCESS
OPERATING SYSTEM DATA
STRUCTURE WITH SHARED
DATA OBJECT — 86

MAP SHARED DATA REGION
INTO USER PROCESS
VIRTUAL ADDRESS
SPACE — 88

RETURN "HANDLE" IDENTIFYING
VIRTUAL ADDRESS IN USER
PROCESS SPACE ASSOCIATED
WITH THE SHARED DATA REGION
TO THE USER PROCESS — 90

FIG. 4A

FIG. 4B

LOCATE SEGMENT IN LIST —96

DOES VM_ANON ARRAY EXIST? —97

YES

NO

ALLOCATE AND INITIALIZE VM_ANON ARRAY —98

UPDATE VM_ANON ARRAY MAPPING VIRTUAL PAGES TO PHYSICAL LOCATION WHERE DATA INCLUDED IN THE VIRTUAL PAGES PHYSICALLY RESIDES. —100

UPDATE MEMORY RESIDENT VIRTUAL PAGE LIST —101

LOOK UP L1-L3 PAGE TABLE ENTRIES —102

L1 FAULT? —103

YES

NO

ALLOCATE L2 PAGE TABLE —104a

UPDATE L1 PAGE TABLE ENTRY —104b

L2 FAULT? —105a

YES

NO

ALLOCATE L3 PAGE TABLE IF SEGMENT HAS NO L3 PAGE TABLE —105b

UPDATE L2 PAGE TABLE ENRTY FOR L3 TABLE —106

ADD USER PROCESS TO USER PROCESS LIST —107

L3 FAULT? —108

YES

NO

ADD SHARED DATA SEGMENT AS USER OF THE PHYSICAL PAGE TO PHYSICAL-TO-VIRTUAL MEMORY MAP —109

FIG. 5A

UPDATE L3 PAGE TABLE ENTRY —110

26

FIG. 5B

## FIG. 6A

FIG. 6B

PHYSICAL
MEMORY

LOCATE ENTRY ON USER
PROCESS ENTRY LIST ‑150

160

66

152

NO ANOTHER
SEGMENT
?

YES

154

DISASSOCIATE USER
PROCESS L2 PAGE TABLE
WITH SHARED DATA
REGION L3 PAGE TABLE

156 DELETE USER PROCESS
FROM USER PROCESS
LIST ASSOCIATED WITH
SEGMET ENTRY.

158

DISASSOCIATE SHARED
DATA ENTRY OF THE USER
PROCESS WITH THE
SHARED DATA OBJECT

FIG. 7A

## FIG. 7B

FIG. 7C

PHYSICAL
MEMORY

START

146a

IS DATA REGION
CURRENTLY IN USE
?

YES

NO

MARK SHARED
DATA REGION FOR
SUBSEQUENT
REMOVAL WHEN NOT
IN USE.

146b

146d

DEALLOCATE
OPERATING SYSTEM
DATA STRUCTURES
ASSOCIATED WITH
THE SHARED DATA
REGION.

FIG. 7D

FIG. 8A

PHYSICAL
MEMORY

FIG. 8B